# EUROPÄISCHE PATENTANMELDUNG

(11) **EP 3 910 761 A1**
(43) Veröffentlichungstag der Anmeldung: **17.11.2021**
(21) Anmeldenummer: 20174999.1
(22) Anmeldetag: 15.05.2020
(51) Int. Cl.: H02K 3/32

(54) **FLÄCHENISOLIERSTOFF EINER DYNAMOELEKTRISCHEN MASCHINE**

(71) Anmelder: Siemens Aktiengesellschaft, 80333 München (DE)
(72) Erfinder: Deutsch, Artur, 94086 Bad Griesbach i. Rottal (DE); Schönbauer, Norbert, 94072 Bad Füssing (DE); Weger, Michael, 94149 Kößlarn (DE)
(74) Vertreter: Michalski Hüttermann & Partner Patentanwälte mbB

(57) **Zusammenfassung**

Die Erfindung betrifft einen Flächenisolierstoff (1), mit drei oder mehreren aufeinander geschichteten Lagen (2,3,4), der eine Längserstreckung (18), eine Quererstreckung (17) und eine Radialerstreckung (16) aufweist, derart, dass die einzelnen Lagen (2,3,4) zumindest in der Quererstreckung (17) unterschiedliche Dimensionen aufweisen.

## Beschreibung

Die Erfindung betrifft einen Flächenisolationsstoff einer dynamoelektrischen Maschine, einen elektrischen Leiter bzw. eine Formspule mit einem derartigen Flächenisolierstoff, als auch eine dynamoelektrische Maschine, die mit einem derartigen Leiter bzw. Formspule versehen ist.

Dynamoelektrische Maschinen benötigen für ihre elektrischen Leiter, die in Nuten eines magnetisch leitfähigen Material angeordnet sind, u.a. eine Isolation der spannungsführenden Bauteile zu den magnetfeldführenden Körper. Durch diese Isolationsstoffe reduziert sich aber der aktive Leiteranteil in einer Nut, insbesondere im Bereich des Nutschlitz, was die Effizienz der dynamoelektrischen Maschine reduziert.

Ausgehend davon liegt der Erfindung die Aufgabe zugrunde eine Isolation von Leitern und/oder Formspulen zu schaffen, die den Anteil des Aktivmaterials der Nut, also das Leitermaterial in der Nut einer dynamoelektrischen Maschine, insbesondere einer Hochspannungsmaschine vergleichsweise erhöht. Des Weiteren soll eine dynamoelektrische Maschine bereitgestellt werden, die eine vergleichsweise höhere Effizienz aufweist.

Die Lösung der gestellten Aufgabe gelingt durch einen Flächenisolationsstoff mit drei oder mehreren aufeinander geschichteten Lagen, der eine Längserstreckung, eine Quererstreckung und eine Radialerstreckung aufweist, derart, dass die einzelnen Lagen zumindest in der Quererstreckung unterschiedliche Dimensionen aufweisen.

Die Lösung der gestellten Aufgabe gelingt ebenso durch einen elektrischen Leiter oder eine Formspule einer dynamoelektrischen Maschine, wobei die Leiter insbesondere zwei gegenüberliegende Schmalseiten und zwei gegenüberliegende Längsseiten aufweisen, wobei zumindest in dem Abschnitt des elektrischen Leiters oder der Formspule, der in einer Nut der dynamoelektrischen Maschine angeordnet ist, ein erfindungsgemäßer Flächenisolierstoff um den Abschnitt umgeschlagen ist, derart, dass eine Umschlagung auf der Schmalseite des Leiters vorliegt, die zu einem Nutschlitz weist,
wobei die radiale Dicke der Umschlagung kleiner ist als die Summe der radial übereinander liegenden Flächenisolierstoffe an dieser Schmalseite.

Die Lösung der gestellten Aufgabe gelingt ebenso durch eine dynamoelektrische Maschine mit einem erfindungsgemäßen Leiter oder Formspule.

Der erfindungsgemäße Flächenisolierstoff weist eine Längserstreckung auf, die im Wesentlichen der axialen Länge der Nut entspricht. Die Längserstreckung wird axial etwas länger sein, um eventuell auftretende elektrisch parasitäre Randeffekte an der Stirnseite des magnetisch leitfähigen Körpers, z.B. des Blechpaketes von Stator und oder Rotor zu vermeiden.

Die einzelnen Lagen des erfindungsgemäßen Flächenisolierstoff weisen unterschiedliche Quererstreckungen auf, um eine erfindungsgemäße Umschlagung zu gewährleisten. Die Quererstreckung ergibt sich im Wesentlichen aus den Dimensionen der Nut, also den Nutwandungen, dem Nutgrund und der dem Nutgrund gegenüberliegenden Seite der Nut, also im Bereich des Nutschlitzes. Die Quererstreckung ergibt sich auch im Wesentlichen aus den Dimensionen des Leiters bzw. Formspule, also der Summe der beiden Längsseiten, einer Schmalseite und einer jeweiligen lagenabhängigen Umschlagungserstreckung.

Der erfindungsgemäße Flächenisolierstoff weist eine Radialerstreckung auf, die der Schichtdicke des Flächenisolierstoffes entspricht. Außer jedoch im Bereich des Nutschlitzes, also einer Schmalseite des Leiters, dort wo die erfindungsgemäße Umschlagung stattfindet, um eine doppelte Schichtdicke zu vermeiden.

Aufgrund des erfindungsgemäßen Flächenisolierstoffes, der bezüglich seiner Quererstreckung unterschiedliche Breiten der einzelnen Lagen aufweist, können nunmehr bei der Montage dieses Isolierstoffs zumindest um den aktiven Teil des Leiters bzw. um den aktiven Teil der Formspule, auf der Schmalseite des Leiters bei der Umschlagung des erfindungsgemäßen Flächenisolierstoffes einzelne Lagen eingespart werden. Dies reduziert dort, also im Bereich des Nutschlitzes, die Schichtdicke des Isolierstoffs, sodass das Leitermaterial erhöht werden kann.

Als aktiver Teil des Leiters bzw. aktiver Teil der Formspule wird der Abschnitt bezeichnet, der in einer Nut der dynamoelektrischen Maschine, also in einem Stator oder auch in einem Rotor platziert ist. Dennoch ist durch den erfindungsgemäßen Gebrauch des Flächenisolationsstoffes ein ausreichender Kriechweg in der Nut, insbesondere auch im Bereich des Nutschlitzes gewährleistet.

Die erfindungsgemäße Umschlagung, die eine Verschachtelung der einzelnen Lagen des Flächenisolierstoffes auf einer Schmalseite des Leiters bzw. der Formspule im Bereich des Nutschlitzes darstellt, führt u.a. vorteilhafterweise zu einer radialen Erhöhung des aktiven Leitermaterials in der Nut, also zu einer Erhöhung des Leiterfüllfaktors bzw. Kupferfüllfaktors und kann somit zur Leistungssteigerung der dynamoelektrischen Maschine beitragen.

Es liegt somit erfindungsgemäß eine vorgebbare Lücke der Mittenlage im Bereich des Nutschlitzes vor. Insbesondere die Mittenlage des Flächenisolierstoffs umfängt den Leiter nicht vollständig. Diese elektrisch wichtige Isolationsschicht ist dort im Bereich des Nutschlitzes nicht notwendig - also dort wo ein Nutverschlusselement vorhanden ist. Es ist somit keine "Gegenelektrode" in Form des Blechpakets vorhanden ist.

Diese Anordnung der einzelnen Lagen des Flächenisolierstoffes über mehrere Ebenen, insbesondere auf der Schmalseite des Leiters oder der Formspule im Bereich des Nutschlitzes, zu einem erfindungsgemäßen Verschachtelungsschema, kann insbesondere durch vorgebbare Biegelinie des Flächenisolationsstoffs zusätzlich optimiert werden. Dabei sind vorzugsweise bereits bei der Herstellung des Flächenisolationsstoffes schon vorab die Dimensionen des elektrischen Leiters, insbesondere der Querschnitt des Leiters vorzugeben, damit die Biegelinien mit den Kanten korrelieren.

Ein Wicklungssystem einer dynamoelektrischen Maschine weist elektrisch eine oder mehrere elektrische Phasen z.B. L1, L2, L3 auf. Jede Phase weist eine oder mehrere Spulen auf, die elektrisch in Reihe und/oder parallelgeschaltet sind. Jede Spule weist eine oder mehrere Windungen auf. Jede Windung ist ein Leiter, dessen aktiver Abschnitt in der Nut angeordnet ist. Die anderen Abschnitte sind außerhalb der Nut angeordnet und bilden in der Regel den Wickelkopf der dynamoelektrischen Maschine. Der Leiter kann auch aus unterschiedlichen elektrisch parallel geschalteten Teilleitern aufgebaut sein. Eine Isolation der Teilleiter soll im Wesentlichen Skineffekte untereinander vermeiden.

Der Flächenisolierstoff ist in diesem Ausführungsbeispiel aus drei Lagen aufgebaut. Einer Außenlage, einer Mittenlage und einer Innenlage.

Die Außenlage und die Innenlage sind jeweils aus einem Aramidpapier, Aramidfolie, Polyesterfolie, Polyestervlies oder Aramidvlies aufgebaut, wobei Aramide ein Gattungsbegriff für solche Polyamide ist, bei denen die Aramidgruppe an aromatische Gruppen gebunden ist. Als Polyester sind Polymere mit Esterfunktion zu verstehen.

Die Mittenlage ist entscheidend für die Isolation zwischen spannungsführendem Leiter, beispielsweise aus Kupfer und dem geerdeten magnetisch leitfähigen Körper, dem Blechpaket. Das dafür vorgesehene Material weist deshalb auch einen vorgebaren Anteil von Glimmer auf. Als Material für die Mittenlage eignet sich Aramidpapier, Aramidfolie, Polyesterfolie, Polyestervlies oder Aramidvlies.

Die Materialkombination des Flächenisolierstoffes kann dabei je nach Anwendungszweck, Verarbeitung aus den oben genannten Materialen oder vergleichbaren Materialien gewählt werden. Die Mittenlage weist vorzugsweise jedoch immer einen Glimmeranteil auf.

Aufgrund es dreischichtigen Aufbaus des Flächenisolierstoffes ist eine flexible und dennoch robuste Verarbeitbarkeit während der Montage des Wicklungssystems gegeben. Der Flächenisolierstoff bildet ein Mehrfachlaminat, dessen einzelne Lagen auch durch ein Bindemittel miteinander fixiert sein können. Dazu eignen sich Klebstoffe, die ggf. auch Zusatzstoffe wie Härter, Beschleuniger, Füllstoffe in vorgebbaren Anteilen aufweisen können.

Bei den gängigen Hochspannungsmaschinen (von 1KV bis 15 KV) sind Schichtdicken des Flächenisolierstoffes von 0,6mm bis 2mm vorzugsweise 0,9mm vorzusehen. Die einzelnen Schichtdicken der Außen- und Innenlage bewegen sich vorzugsweise zwischen 0,3 und 0,4 mm. Die Mittenlage passt sich demnach an.

Vorteilhafterweise sind in dem Bereich des Nutschlitzes Nutverschlusselemente vorgesehen, die eine Kompaktierung der erfindungsgemäßen Umschlagung unterstützen.

Dies wird erreicht, dass im Bereich des Nutschlitzes eine oder mehrere der gesamten Anzahl der Lagen nicht auf Stoß, sondern auf Lücke angeordnet sind. Es tritt dabei keine Reduzierung der Isolationsfestigkeit ein, da dort die Gegenelektrode des spannungsführenden Leiters in Form des normalerweise geerdeten Blechpakets "fehlt".

Die Erfindung ist nicht auf einen dreilagigen Flächenisolierstoff reduziert, vielmehr kann der erfindungsgemäße Gedanke der verschachtelten Umschlagung auch bei zweilagigen, vierlagige, usw. umgesetzt werden. Entscheidend ist immer, dass aufgrund der verschachtelten Umschlagung der beteiligten Lagen des Flächenisolierstoffes eine Erhöhung der aktiven Leitermaterials in der Nut eintreten kann.

Die Erfindung sowie vorteilhafte Ausgestaltungen der Erfindung werden anhand prinzipiell dargestellter Ausführungsbeispiele näher erläutert, darin zeigen:
- FIG 1: einen Flächenisolierstoff in Seitenansicht,
- FIG 2: einen Flächenisolierstoff in Draufsicht,
- FIG 3: einen Ausschnitt eines Massivleiters mit Flächenisolierstoff,
- FIG 4: einen Ausschnitt eines Leiters aus Teilleitern mit Flächenisolierstoff,
- FIG 5: eine dynamoelektrische Maschine.

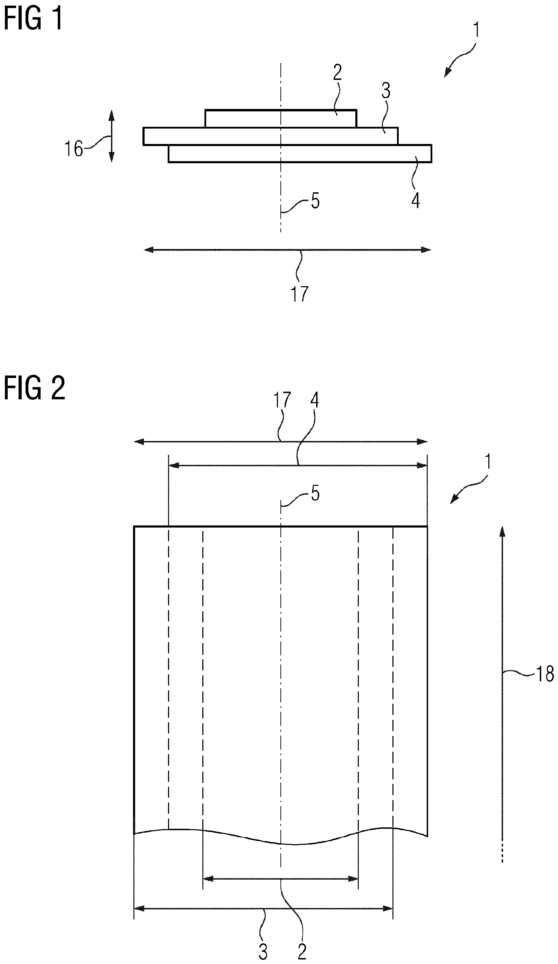

FIG 1 zeigt in er prinzipiellen Darstellung einen Flächenisolierstoff 1 mit drei Lagen. Einer Außenlage 2 (im Wesentlichen Kontakt mit einer Nutwandung 10/Nutgrund 15 mit Ausnahme Bereich Nutschlitz 14), einer Mittenlage 3 (zwischen Außenlage 2 und Innenlage 49 und einer Innenlage 4 (im wesentlichen Kontakt mit einem Leiter 6 mit Ausnahme Bereich Nutschlitz 4). Diese drei Lagen weisen unterschiedliche Quererstreckungen 17 auf. Diese unterschiedliche Quererstreckungen 17 können symmetrische zu einer Bezugslinie 5 oder auch asymmetrisch angeordnet sein. Die drei Lagen des Flächenisolierstoffes 1 sind miteinander stoffschlüssig, also unverrückbar verbunden, insbesondere verklebt. Je nach thermischer Anforderung sind dabei unterschiedliche Kleber oder Bindemittel einzusetzen.

Der erfindungsgemäße Flächenisolierstoff 1 weist eine Längserstreckung 18 auf, die im Wesentlichen der axialen Länge der Nut 9 entspricht. Die Längserstreckung 18 wird axial etwas länger sein, um eventuell auftretende elektrisch parasitäre Randeffekte an der Stirnseite des magnetisch leitfähigen Körpers, z.B. des Blechpaketes von Stator und oder Rotor zu vermeiden.

Die einzelnen Lagen des erfindungsgemäßen Flächenisolierstoff 1 weisen unterschiedliche Quererstreckungen 17 auf, um eine erfindungsgemäße Umschlagung zu gewährleisten. Die Quererstreckung 17 ergibt sich im Wesentlichen aus den Dimensionen der Nut 9, also den Nutwandungen 10, dem Nutgrund 15 und der dem Nutgrund gegenüberliegenden Seite der Nut 9, also im Bereich des Nutschlitzes 14. Die Quererstreckung 17 ergibt sich auch im Wesentlichen aus den Dimensionen des Leiters 6 bzw. Formspule, also der Summe der beiden Längsseiten, einer Schmalseite und einer jeweiligen lagenabhängigen Umschlagungserstreckung im Bereich des Nutschlitzes 14.

Der erfindungsgemäße Flächenisolierstoff 1 weist eine Radialerstreckung 16 auf, die der Schichtdicke des Flächenisolierstoffes 1 entspricht. Außer jedoch im Bereich des Nutschlitzes 14, also einer Schmalseite des Leiters 6, dort wo die erfindungsgemäße Umschlagung stattfindet. Durch die erfindungsgemäße verschachtelte Umschlagung wird dort eine doppelte Schichtdicke zu vermeiden.

Die Lagen 2, 3, 4 weisen je nach Anforderung unterschiedliche Dicken und/oder Zusammensetzungen auf. Dabei ist insbesondere die Mittenlage 3 mit einem vorgebbaren Anteil von Glimmer versetzt.

FIG 2 zeigt eine Draufsicht auf den Flächenisolierstoff 1, wobei die Quererstreckung 17 der einzelnen Lagen 2, 3, 4 durch gestrichelte Linien dargestellt ist.

FIG 2 zeigt weiterhin beispielhaft und optional Biegelinien 19 des Flächenisolierstoffes 1 an Kanten des Leiters 6. Dies vereinfacht die Verarbeitung und führt zu einer weiteren Kompaktierung des Isolationsaufbaus in der Nut 9. Dies Biegelinien 19 dürfen selbstverständlich keine Einbußen in der Isolationsfestigkeit vor allem an den Kanten des Leiters 6 verursachen.

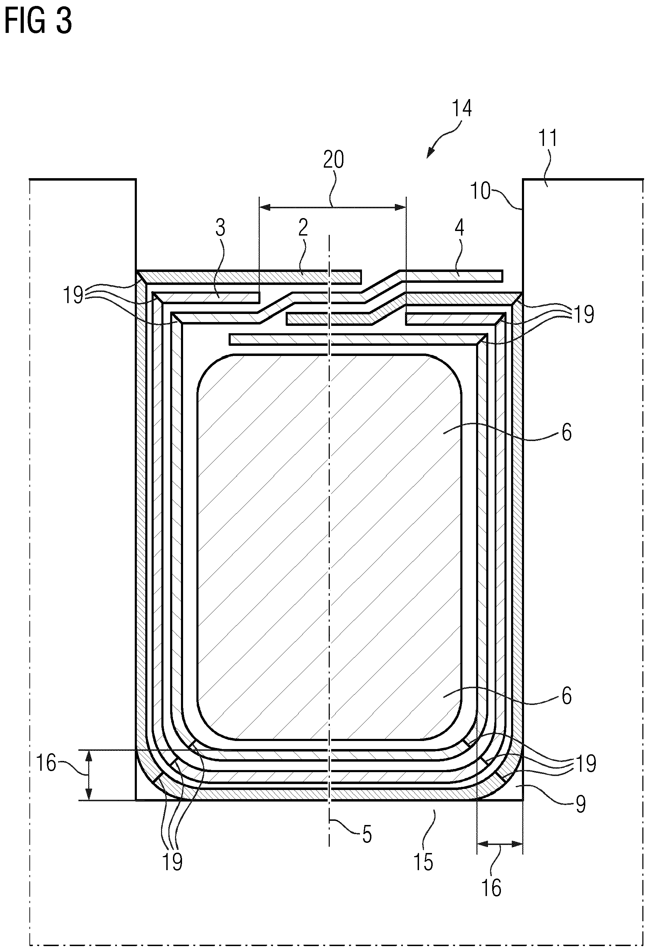

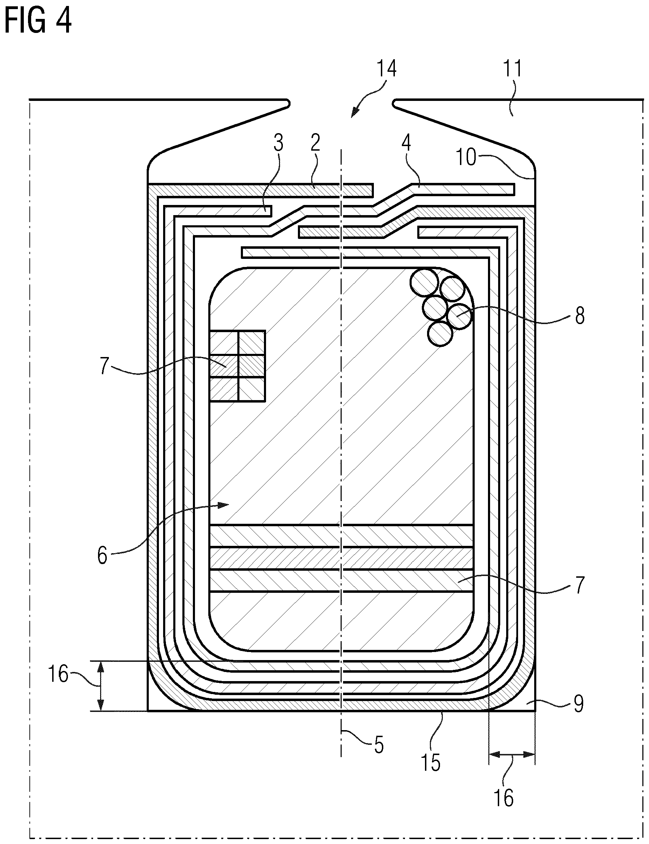

FIG 3 zeigt einen Teilquerschnitt eines Leiters 6, der massiv ausgeführt ist. Auch dort kann der Flächenisolierstoff 1 eingesetzt werden, ebenso wie bei einem Leiter 6, nach FIG 4, der dort beispielhaft mit unterschiedlichsten Teilleitern (Rundleiter, im Wesentlichen rechteckige Teilleiter) versehen ist. Diese Teilleiter sind innerhalb des Leiters 6 isoliert.

Aufgrund der unterschiedlichsten Quererstreckung 17 der einzelnen Lagen 2, 3, 4 kann die Umschlagung im Bereich des Nutschlitzes 14 die radiale Schichtdicke des Flächenisolierstoffes 1 gegenüber herkömmlichen Umschlagungen reduziert werden.

Bei den gezeigten Ausführungsformen nach FIG 3 oder Fig 4 hat die Innenlage 4 die breiteste Quererstreckung 17. Danach folgt in der Dimension der Quererstreckung 17 die Außenlage 2. Die Mittellage 3 ist so dimensioniert, dass sie den Leiter 6 nicht ganz umschließt. Der verbleibende Spalt bzw. Lücke 20 zwischen den beiden Enden der Quererstreckung der Mittenlage 3 wird durch die Innenlage 4 und/oder die Außenlage 2 eingenommen.

Entscheidend für die Umsetzung der Erfindung ist, dass der Flächenisolierstoff 1 am Leiter 6 vor radialem oder axialem Einsetzen in die Nut 9 derart platziert wird, dass die Bezugslinie 5 an einer vorgegebenen Position am Leiter 6 ansetzt wird. Dieses Ansetzen am Leiter 6 erfolgt insbesondere in der Mitte auf der Seite des Leiters 6 (z.B. Schmalseite), die dann innerhalb der Nut 9 am Nutgrund 15 an einem vorbestimmten Ort am Nutgrund 15, vorzugsweise dort mittig platziert ist.

Der Leiter 6 kann also vorab mit dem Flächenisolierstoff 1 versehen werden und dann in die Nut 9 eingesetzt werden. Ebenso ist es möglich, die Nut 9 zuerst mit dem Flächenisolierstoff 1 auszukleiden und dann den Leiter 6 einzusetzen. Dabei ist darauf zu achten, dass der Flächenisolierstoff 1 ortsgenau in der Nut 9 platziert wird. Beispielseise indem die Bezugsline 5 des Flächenisolierstoffs 1 in der Mitte am Nutgrund 15 angeordnet wird.

Unabhängig von der oben beschriebenen Art der Verlegung des Flächenisolierstoffes 1 ist darauf zu achten, dass sofern Biegelinien 19 vorhanden sind, diese an den Kanten von Leiter 6 und/oder in Ecken der Nut 9 positionsgenau platziert werden.

Vorteilhafterweise sind in dem Bereich des Nutschlitzes 14 nicht näher dargestellte Nutverschlusselemente vorgesehen, die u.a. eine Kompaktierung der erfindungsgemäßen Umschlagung des Flächenisolierstoffes 1 unterstützen.

Dies wird erreicht, dass im Bereich des Nutschlitzes 14 eine oder mehrere der gesamten Anzahl der Lagen nicht auf Stoß, sondern auf Lücke 20 angeordnet sind. Es tritt dabei keine Reduzierung der Isolationsfestigkeit ein, da dort die Gegenelektrode des spannungsführenden Leiters in Form des Blechpakets "fehlt".

Die Lagen 2, 3, 4 sind insbesondere in FIG 3, 4 prinzipiell und vereinfacht dargestellt, zwischen den einzelnen Lagen 2, 3, 4 sind keine Hohlräume oder Abstände, ebenso wenig wie zwischen der Innenlage 4 und dem Leiter 6.

Eine mit derartigem Flächenisolierstoff 1 versehene dynamoelektrische Maschine weist einen Stator und einen Rotor auf, die jeweils einen magnetisch leitfähigen Körper aus axial geschichteten Blechen 11 aufweisen. Die Leiter 6, die an der Stirnseite von Stator und ggf. Rotor Wickelköpfe aufweisen, weisen insbesondere in den Nuten 9 des magnetisch leitfähigen Körpers diese Flächenisolierung 1 auf. Diese Flächenisolierung 1 erstreckt sich im Normalfall axial aus der Stirnseite von Stator und/oder Rotor ragend auch noch über vorgebbare Distanz in Richtung Wickelkopf, um die notwendige Isolationsfestigkeit zu erhalten.

Eine mit derartigem Flächenisolierstoff 1 versehene dynamoelektrische Maschine ist vergleichsweise effizient, da bei vergleichbarem Nutquerschnitt der Kupferfüllfaktor erfindungsgemäß erhöht werden kann.

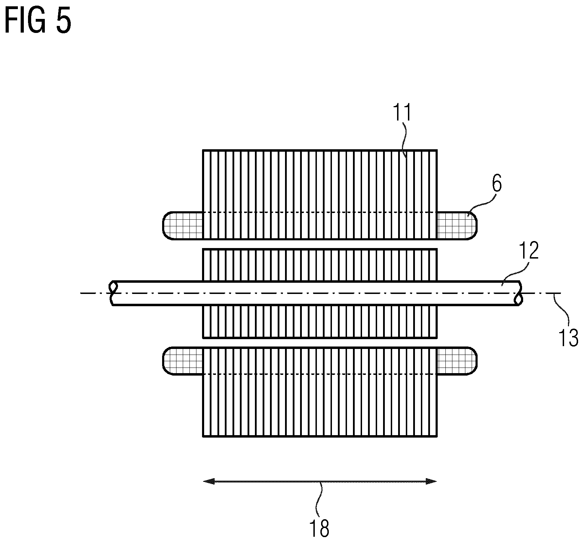

Eine derartige dynamoelektrische Maschine nach FIG 5 kann ein Motor oder auch ein Generator, insbesondere einer Windkraftanlage sein.

Die Nuten 9 des magnetisch leitfähigen Körpers von Stator und/oder Rotor sind halboffen oder offen ausgeführt. D.h. der Nutschlitz 14 ist enger als die Nutbreite oder entspricht der Nutbreite.

Der Generator kann dabei auch in Umfangsrichtung betrachtet segmentiert aufgebaut sein.

## Patentansprüche

1. Flächenisolierstoff (1), mit drei oder mehreren aufeinander geschichteten Lagen (2,3,4), der eine Längserstreckung (18), eine Quererstreckung (17) und eine Radialerstreckung (16) aufweist, derart, dass die einzelnen Lagen (2,3,4) zumindest in der Quererstreckung (17) unterschiedliche Dimensionen aufweisen.

2. Flächenisolierstoff (1) nach Anspruch 1, **dadurch gekennzeichnet , dass** die einzelnen Lagen (2,3,4) miteinander verklebt sind.

3. Flächenisolierstoff (1) nach einem der vorhergehenden Ansprüche, **dadurch gekennzeichnet ,**
**dass** die einzelnen Lagen bezüglich einer Bezugslinie (5) jeweils unterschiedlich asymmetrisch angeordnet sind.

4. Flächenisolierstoff (1) nach einem der vorhergehenden Ansprüche, **dadurch gekennzeichnet,**
**dass** der Flächenisolierstoff (1) in Längserstreckung verlaufende vorgegebene Biegelinien aufweist.

5. Elektrischer Leiter (6) oder Formspule einer dynamoelektrischen Maschine,
- wobei die Leiter (6), insbesondere zwei gegenüberliegende Schmalseiten und zwei gegenüberliegende Längsseiten aufweisen,
- wobei zumindest in dem Abschnitt des elektrischen Leiters (6) oder der Formspule, der in einer Nut (9) der dynamoelektrischen Maschine angeordnet ist, diesen Abschnitt ein Flächenisolierstoff (1) nach Anspruch 1 umgibt, derart dass der Flächenisolierstoff (1) zumindest um den aktiven Leiterabschnitt umgeschlagen ist, derart, dass eine Umschlagung auf der Schmalseite des Leiters (6) vorliegt, die zu einem Nutschlitz weist,
- wobei die radiale Dicke der Umschlagung kleiner ist als die Summe der radial übereinander liegenden Flächenisolierstoffe an dieser Schmalseite.

6. Elektrischer Leiter (6) nach Anspruch 5, **dadurch gekennzeichnet, dass** die Bezugslinie (5) des Flächenisolierstoffes (1) auf der dem Nutschlitz (14) abgewandten Seite am Nutgrund (15), insbesondere mittig angeordnet ist.

7. Dynamoelektrische Maschine mit einem Leiter nach Anspruch 5 oder 6.

8. Windkraftanlage mit einer dynamoelektrischen Maschine nach Anspruch 7.
